# EUROPEAN PATENT APPLICATION

(11) **EP 4 813 816 A1**
(43) Date of publication of application: **30.09.2026**
(21) Application number: 26167596.1
(22) Date of filing: 25.03.2026
(51) Int. Cl.: B62D 35/00

(54) **MOTOR VEHICLE WITH AERODYNAMIC DUCT ON THE BOTTOM**

(30) Priority: 27.03.2025 IT 202500006402
(71) Applicant: FERRARI S.p.A., 41100 Modena (IT)
(72) Inventor: SEDDA, Salvatore, 41100 Modena (IT); BIANCALANA, Matteo, 41100 Modena (IT); DE FABIIS, Stefano, 41100 Modena (IT); TOVANI, Giacomo, 41100 Modena (IT)
(74) Representative: Studio Torta S.p.A.

(57) **Abstract**

A motor vehicle (1) includes a bottom (3) having a lower surface (5) facing towards the ground, a panel (6) having an external upper surface (6b) facing towards an external space above the motor vehicle (1), characterized by comprising an aerodynamic duct (10) passing substantially vertically from a first opening (11) on the lower surface (5) of the bottom (3) to a second opening (12) on the upper surface (6b) of the panel (6).

## Description

### CROSS-REFERENCE TO RELATED APPLICATIONS

This patent application claims priority from Italian patent application no. 102025000006402 filed on March 27, 2025, the entire disclosure of which is incorporated herein by reference.

### TECHNICAL FIELD

The invention generally relates to a motor vehicle and, more in particular, to an aerodynamic duct of the motor vehicle.

### PRIOR ART

As it is known, the aerodynamics of motor vehicles is influenced by the height from the ground of the bottom and, therefore, by the behaviour of the suspensions that determine the relative arrangement between the sprung mass, including the bottom, and the unsprung mass of the motor vehicle.

Therefore, since the height from the ground varies according to the operation of the suspensions, the downforce acting upon the motor vehicle is variable, in particular in a non-linear manner as a function of the height from the ground.

The variability of the downforce can represent a drawback, especially if phenomena of limitation of the flow rate of the underbody aerodynamic flow, also called "chocking" phenomena, occur. These phenomena can destabilize the flow, causing discontinuities in the variation of the aerodynamic load; depending on the vehicle's aerodynamic characteristics, these may manifest as discontinuities in the variation of the aerodynamic load relative to height from the ground, namely as sudden, unpredictable fluctuations.

Therefore, the drawback set forth above needs to be addressed, possibly by increasing the downforce on the motor vehicle.

The object of the invention is to fulfil the need discussed above, preferably in a simple and reliable fashion.

### DESCRIPTION OF THE INVENTION

Said object is reached by a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle according to the invention,

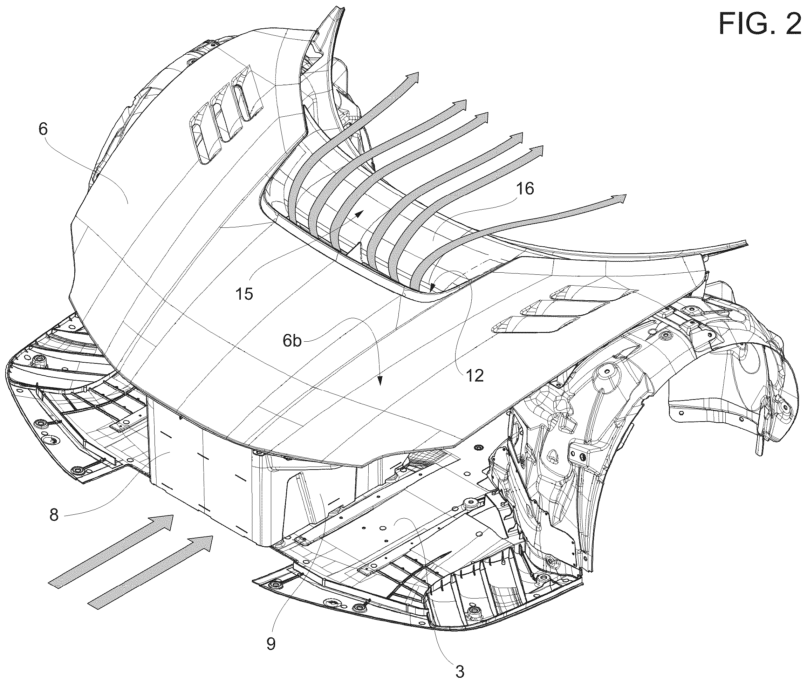

- figure 2 is a perspective view, on a larger scale with parts removed for greater clarity, of a front portion of the motor vehicle,

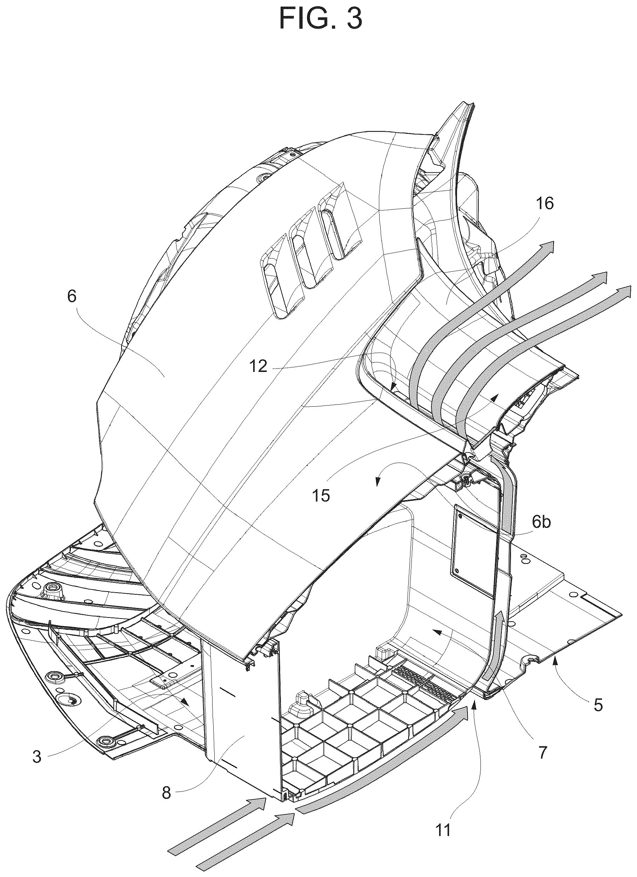

- figure 3 is a sectional view, on a further larger scale, of the portion of figure 2 according to a section plane orthogonal to a pitch axis of the motor vehicle,

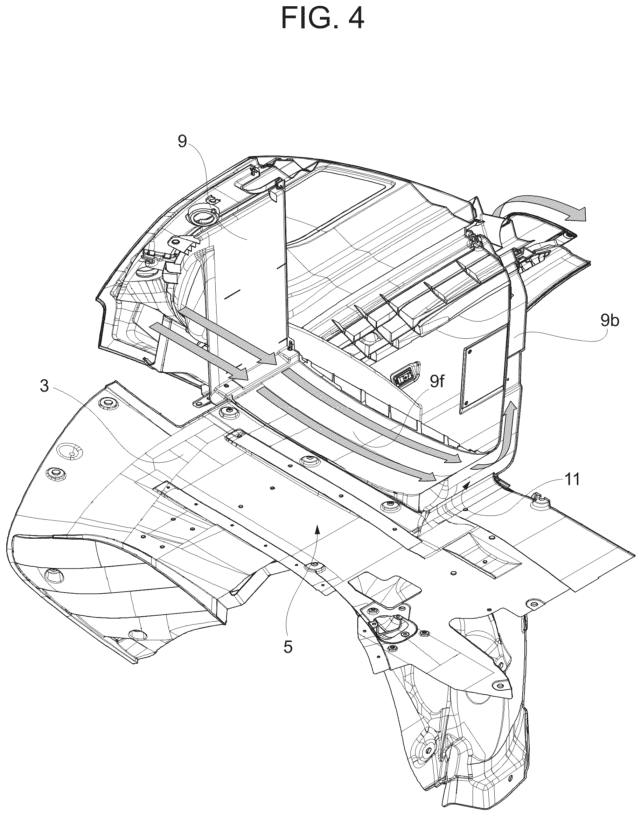

- figure 4 is a perspective view from the rear of the sectional view of figure 3, and

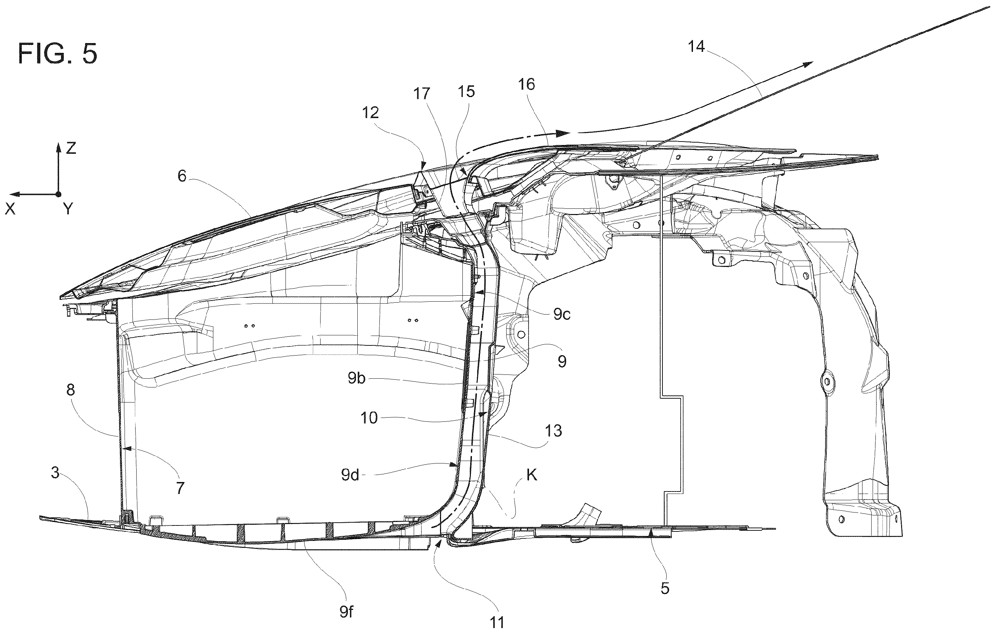

- figure 5 is a cross section of the portion of figure 2 according to the section plane orthogonal to the pitch axis.

### EMBODIMENTS OF THE INVENTION

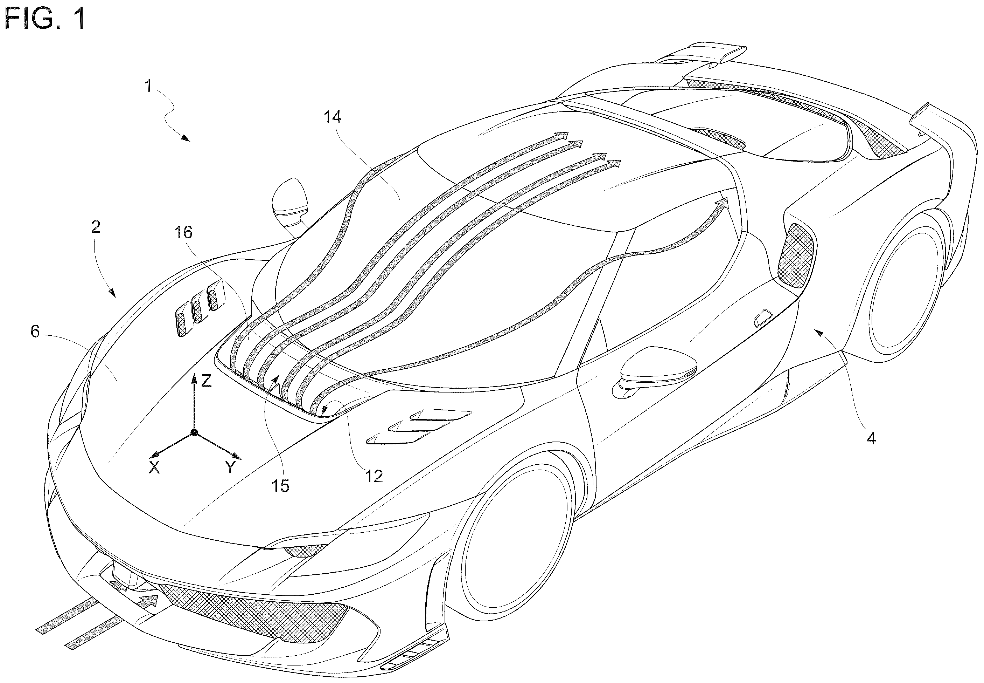

In figure 1, reference number 1 is used to indicate, as a whole, a motor vehicle.

The motor vehicle 1 comprises a front portion 2, according to a normal direction of forward motion of the motor vehicle 1.

The motor vehicle 1 has a roll axis X, which is longitudinal, namely parallel to or coinciding with the direction of forward motion.

The motor vehicle 1 also has a pitch axis Y, which is orthogonal to the roll axis X and horizontal, thereby extending laterally, namely from one side 4 to the other of the motor vehicle 1 orthogonally to the roll axis X.

The motor vehicle 1 further has a yaw axis Z, which is orthogonal to the axes X, Y and thus has at least one vertical component, namely oriented as the direction of gravity acceleration.

The motor vehicle 1 has a bottom 3, which has a lower surface 5 facing, in use, towards the ground.

Therefore, the bottom 3 is the lowest element of the sprung mass of the motor vehicle 1, just as the lower surface 5 constitutes the lower limit of the bottom 3.

In an opposite position with respect to the bottom according to the axis Z, the motor vehicle 1 further has a panel 6 having an external upper surface 6b, which faces upwards, i.e. towards an external space above the motor vehicle 1.

The panel 6 preferably is part of the front portion 2.

Specifically, the panel 6 is a hood of the front portion 2. Herein, the panel 6 is configured to cover an internal compartment of the motor vehicle 1 from above.

The internal compartment is defined by an internal volume 7, in turn defined - in particular - by the walls 9 of an enclosure or box 8 located under the panel 6 to be covered at the top or from above by the panel 6.

The fact that the panel 6 specifically is a front hood does not necessarily mean that the internal compartment covered by the panel 6 at the top necessarily is an engine compartment. In fact, in the specific embodiment shown herein, the enclosure 8 preferably is a trunk or storage box, whereby the internal volume 7 is designed to receive or accommodate objects, which can be of various kinds, compatible with the dimensions of the internal volume 7.

The panel 6 preferably is movable or has at least one movable portion, in particular with respect to a frame of the motor vehicle 1, to selectively cover and uncover the enclosure 8.

The enclosure 8 is accessible from the outside of the motor vehicle 1 when it is uncovered by the panel 6. On the other hand, for example, the enclosure 8 could no longer be accessible (namely, it could be inaccessible) from the outside of the motor vehicle 1 when it is covered by the panel 6.

In the example shown, the enclosure 8 is open, in particular at the top, so that the internal volume 7 is directly accessible from the outside of the motor vehicle 1 (in particular, from above) when the enclosure 8 is uncovered by the panel 6. In this example, therefore, when the enclosure 8 covers the panel 6, the latter has at least a portion forming part of the walls 9. According to other examples that are not shown herein, the enclosure 8 could be closed with the internal volume 7 accessible from the outside, when the panel 6 uncovers the enclosure 8, through a lid or door, for example an upper lid or door, forming part of the walls 9 and configured in a movable or removable manner with respect to the other walls 9.

The motor vehicle 1 comprises an aerodynamic duct 10 that passes or extends substantially vertically or substantially according to the axis Z (i.e. with a mainly vertical extension or according to the axis Z) from an opening 11 (at least partly or more preferably entirely) on the lower surface 5 to an opening 12 on (at least partly or for example entirely) the upper surface 6b.

The contours of the opening 11 and/or of the opening 12 are, for example, internal contours of the surfaces 5, 6b, respectively, namely they are spaced apart, in particular towards the inside or the centre of the surfaces 5, 6b, from the external contours of the surfaces 5, 6b.

The openings 11, 12 are located, in particular, at the front portion 2.

In the example shown, the openings 11, 12 are vertically aligned with each other, namely aligned according to the axis Z. However, this is not necessary, since the openings 11, 12 could also have been more or less longitudinally offset, i.e. with an offset or mutual distance according to the axis X, provided that the component with the greatest extension dimension of the duct 10 is that according to the axis Z, which is equivalent to saying that the duct 10 extends or passes substantially vertically or substantially according to the axis Z.

Anyway, the aerodynamic duct 10 extends along an axis K of its own, which generally is a curve (including the option of a straight line, possibly even a broken line) in the space defined by the axes X, Y, Z.

The duct 10 is, in particular, at least partly delimited, more in detail at least for the most part, by at least one of the walls 9, specifically indicated by the symbol 9b. In other words, the duct 10 has at least one portion, in particular a larger portion (i.e. wider than the rest of the duct 10), which is delimited by the wall 9b.

Preferably, the wall 9b directly delimits the relative portion of the duct 10, namely the wall 9b has a face 9c that directly looks onto the duct 10 (the term directly means: without other interposed elements) or directly faces the duct 10, namely that directly delimits the relative portion of the duct 10.

Furthermore, conveniently, the wall 9b delimits the duct 10 at the front, according to the direction of forward motion or the axis X. In other words, at least part of the duct 10 extends behind, in particular immediately behind, the wall 9b.

In this regard, in this description, expressions such as front, rear, at the front, rearward, in front of, behind and the like refer to the direction of forward motion of the motor vehicle 1 or to the axis X.

In addition to the face 9c, the wall 9b has a thickness and a face 9d that is opposite the face 9c according to the thickness. Preferably, the face 9d directly delimits the internal volume 7 of the enclosure 8, namely it directly looks onto or directly faces the internal volume 7.

The wall 9b preferably is transversal with respect to a plane parallel to the plane of the axes X, Y, i.e. to a horizontal plane, whereby the wall 9b extends, in other words, substantially vertically, with the meaning indicated above for the expression substantially.

Preferably, among the walls 9, a wall 9f defines a portion of the bottom 3 and therefore has a portion of the lower surface 5. The wall 9f, in particular, creates an angle with the wall 9b, since the wall 9f extends substantially horizontally, while the wall 9b extends substantially vertically.

The wall 9f has at least one end (in particular a longitudinal end, i.e. according to the axis X, more in particular a rear end) at the opening 11; said end has an upward concavity, namely it is curved with an upward concavity. The upward concavity could also be a feature attributable to the entire wall 9f, rather than just to an end thereof.

More in detail, the end of the wall 9f or the wall 9f itself defines or ends rearward with an edge of the opening 11, the edge being - in particular - transversal with respect to the axis X.

In this way, the wall 9f or the end thereof defines an inverted chute that ends at the opening 11, thus defining an inlet guide for an aerodynamic flow under the bottom 3 or on the bottom 3 (i.e. skimming the bottom 3 from below) to be channelled into or to enter the duct 10. In other words, the wall 9f or the end thereof defines an inlet guide at the opening 11 for the aerodynamic flow on the bottom 3 towards or for a passage of the aerodynamic flow through the duct 10. Herein, according to a possible non-limiting aspect, the passage of the aerodynamic flow through the duct 10 is from the opening 11 to the opening 12.

Similarly to the wall 9b, although independently thereof, the wall 9f could have a thickness, a face directly facing the ground and a face opposite the previous one according to the thickness and directly delimiting the internal volume 7, in particular from below, or directly facing the internal volume 7.

More generally, each of the geometric characteristics described above for the wall 9f (taken individually, one independently of the other) could also be applied to a portion of the bottom 3 and/or of the lower surface 5 distinct and separate from a lower wall or base of the enclosure 8, if the latter lower wall were not part or did not define part of the bottom 3 and were rather arranged above the bottom 3 in a distinct manner.

According to a possible non-limiting aspect, the concavity of the end of the wall 9f is also oriented towards the front of the motor vehicle 1.

On the side opposite the wall 9b according to the axis X or rearward, a portion (more in particular a larger portion, i.e. more extended than the rest) of the duct 10 is delimited by a wall or back wall 13.

The motor vehicle 1 further comprises a front windshield or, more simply, a windshield 14 arranged rearward (according to the axis X) of the panel 6. The duct 10 extends forward of, namely in front of the windshield 14, according to the axis X.

More in detail, at least a portion, in particular a larger portion of the duct 10 extends longitudinally (i.e. according to the axis X) between the enclosure 8 and the windshield 14.

The duct 10 has or is at least partly delimited by a connecting wall 15, for example forming part of the back wall 13, which (the connecting wall 15) is connected to the panel 6 at a rear edge 16 of the opening 12.

The rear edge 16, for example forming part of the panel 6, or possibly forming part of a further panel distinct from the panel 6, is transversal with respect to the axis X.

The connecting wall 15, in particular at the rear edge 16, preferably is concave (namely, has a concavity) downwards and/or towards the rear of the motor vehicle 1.

In this way, also (but not only) thanks to the connecting wall 15, the aerodynamic flow exiting the opening 12 is guided towards the windshield 14.

Hence, the duct 10 connects the bottom 3 of the motor vehicle 1 to the panel 6 and, in particular, to the windshield 14.

For example, an end portion 17 of the duct 10, the end portion 17 ending at the top with the opening 12, has an axially diverging configuration (i.e. along the axis K), in particular as a result of the concavity of the connecting wall 15, which delimits the end portion 17 rearward.

During the operation of the motor vehicle 1, the aerodynamic flow generated due to the forward movement of the motor vehicle 1 at least partly flows under the motor vehicle 1, between the bottom 3 and the road, thus skimming the lower surface 5.

Here, the aerodynamic flow meets the opening 11, whereby it partly enters or is partly channelled into the duct 10, for example by means of the inlet guide created by the upward concavity of the wall 9f.

The aerodynamic flow vertically flows through the duct 10 to discharge above the panel 6 at the opening 12.

At this point, the aerodynamic flow exiting of the opening 12 continues its path on the windshield 14 and/or on the panel 6 towards the windshield 14, for example guided by the connecting wall 15.

According to a possible non-limiting aspect, the duct 10 passes substantially vertically from the opening 11 on the lower surface 5 of the bottom 3 to the opening 12 on the upper surface 6b of the panel 6 so that the aerodynamic flow generated due to the forward movement of the motor vehicle 1 (during its operation) and passing at least partly under the motor vehicle 1, between the bottom 3 and the road, thus skimming the lower surface 5, meets the first opening 11, thus partly entering the duct 10 (so that it partly enters the duct 10), vertically flows through the duct 10 to discharge above the panel 6 at the opening 12 and, exiting the second opening 12 (or after having flown out of the opening 12), continues its path on the windshield 14 and/or on the panel 6 towards the windshield 14.

According to a possible non-limiting aspect, the duct 10 is configured to guide an entry of an aerodynamic flow into the duct 10 through the opening 11, the aerodynamic flow being generated under the bottom 3 by a forward movement of the motor vehicle 1, as well as to guide the aerodynamic flow entering from the opening 11 to an exit of the aerodynamic flow from the opening 12 towards the windshield 14, namely to an exit of the aerodynamic flow from the duct 10 through the opening 12 towards the windshield 14.

According to a possible non-limiting aspect, the opening 11 is an inlet opening of the duct 10; the opening 12 is an outlet opening of the duct 10.

According to a possible non-limiting aspect, the opening 11 is an inlet opening of the duct 10 for the aerodynamic flow generated due to the forward movement of the motor vehicle 1 under the bottom 3 and entering the duct 10; the opening 12 is an outlet opening of the duct 10 for the aerodynamic flow entering the duct 10 through the inlet opening 11.

Owing to the above, the advantages of the motor vehicle 1 according to the invention are evident.

Thanks to the presence of the opening 11 and the duct 10, the aerodynamic flow rate led in under the bottom 3 by the opening 11 increases, which corresponds to an additional downforce.

The losses associated with the boundary layer of the aerodynamic flow under the bottom 3 are trapped in the duct 10 with the result of a greater downforce.

The dependence between the downforce or the flow rate of the aerodynamic flow and the height from the ground of the bottom 3 is substantially linearized by the presence of the duct 10, so that the chocking effect (discussed in the introductory portion of this description) due to the bottom 3 getting closer to the ground is delayed.

Furthermore, the aerodynamic flow flowing from the bottom 3 through the duct 10 comes into thermal contact with the walls 9 of the enclosure 8 and especially with the wall 9b, whereby the temperature of the internal volume 7 can be limited thanks to the heat-subtraction effect provided by the aerodynamic flow along the duct 10.

Furthermore, the arrangement of the duct 10 between the enclosure 8 (more precisely, the wall 9b) and the windshield 14, according to the axis X, is particularly convenient as it exploits an area that can easily be traversed by a duct.

Finally, the motor vehicle 1 according to the invention can be subjected to changes and variants, which, though, do not go beyond the scope of protection set forth in the appended claims.

In particular, the number and shape of each one the components described and shown herein could be different.

Furthermore, the various embodiments can be combined with one another without any limitations, with particular reference to the various features individually described in the different paragraphs of the description. Each one of these features is independently applicable to each one of the disclosed embodiments.

## Claims

1. Motor vehicle (1) comprising
- a bottom (3) having a lower surface (5) arranged to face towards the ground,
- a panel (6) having an upper surface (6b) facing towards an external space above the motor vehicle (1), **characterized by** comprising an aerodynamic duct (10) passing substantially vertically from a first opening (11) on the lower surface (5) of the bottom (3) to a second opening (12) on the upper surface (6b) of the panel (6).

2. The motor vehicle according to claim 1, wherein the panel (6) is configured to cover from above an enclosure (8) having walls (9) arranged to define an internal volume (7) of the enclosure selectively accessible from outside the motor vehicle (1).

3. The motor vehicle according to claim 2, wherein the panel (6) is movable to selectively uncover the enclosure (8), thereby allowing access thereto from the outside.

4. The motor vehicle according to claim 2 or 3, wherein the duct (10) has at least one duct portion delimited by a first wall (9b) of said walls (9).

5. The motor vehicle according to claim 4, wherein the first wall (9b) is transversal with respect to a plane parallel to a further plane defined by a roll axis (X) and a pitch axis (Y) of the motor vehicle (1).

6. The motor vehicle according to any one of claims 2 to 5, wherein a second wall (9f) of said walls (9) defines a portion of the bottom (3) and therefore has a portion of said lower surface (5).

7. The motor vehicle according to any of the preceding claims, wherein a portion of the bottom (3), for example defined by a second wall (9f) of said walls (9), has a longitudinal end at the first opening (11), the longitudinal end being curved with concavity upwards so as to define an inlet guide at the first opening (11) for an aerodynamic flow on the bottom (3) towards a passage through the duct (10).

8. The motor vehicle according to claim 7, wherein the inlet guide for the aerodynamic flow is to enter the duct (10).

9. The motor vehicle according to any one of claims 4 to 8, wherein the first wall (9b) frontally delimits the duct portion, according to a direction of forward motion of the motor vehicle (1).

10. The motor vehicle according to claim 9, wherein the first wall (9b) has a thickness, a first face (9c) directly delimiting the duct portion, and a second face (9d) opposite the first face (9c) according to the thickness of the first wall (9b) and directly delimiting said internal volume (7).

11. The motor vehicle according to any of the preceding claims, further comprising a windshield (14) arranged rearward of the panel (6) according to a direction of forward motion of the motor vehicle (1), wherein the duct (10) extends forward of the windshield (14).

12. The motor vehicle according to claim 11, wherein the duct (10) connects to the panel at a rear edge (16) of the second opening (12) with a connecting wall (15) concave downward and/or towards the rear of the motor vehicle (1) so as to guide an aerodynamic flow exiting the second opening (12) towards the windshield (14).

13. The motor vehicle according to claim 11, wherein the duct (10) connects to the panel at a rear edge (16) of the second opening (12) with a connecting wall (15) so as to guide an aerodynamic flow exiting the second opening (12) towards the windshield (14).

14. The motor vehicle according to claim 11, wherein the duct (10) passes substantially vertically from the first opening (11) on the lower surface (5) of the bottom (3) to the second opening (12) on the upper surface (6b) of the panel (6) so that an aerodynamic flow generated due to a forward movement of the motor vehicle (1) during the operation of the motor vehicle (1) and passing at least partly under the motor vehicle (1), between the bottom (3) and a road, thus skimming the lower surface (5), meets the first opening (11), thus partly entering the duct (10), vertically flows through the duct (10) to discharge above the panel (6) at the second opening (12) and, exiting the second opening (12), continues its path on the windshield (14).

15. The motor vehicle according to claim 11, wherein the duct (10) is configured to guide an entry of an aerodynamic flow into the duct (10) through the first opening (11) and to guide said aerodynamic flow from the first opening (11) to an exit of said aerodynamic flow from the second opening (12) towards the windshield (14).
